# EUROPEAN PATENT APPLICATION

(11) **EP 4 847 475 A1**
(43) Date of publication of application: **02.12.2026**
(21) Application number: 26181434.7
(22) Date of filing: 27.05.2026
(51) Int. Cl.: C04B 35/628, C04B 35/80, C04B 41/00, C04B 41/52, C04B 41/89, C04B 111/00

(54) **CRACK PLUGGING COATINGS**

(30) Priority: 29.05.2025 US 202519223012
(71) Applicant: RTX Corporation, Farmington, CT 06032 (US)
(72) Inventor: CALLAWAY, Evan B., Goleta (US); NABLE, Jun, Hamden (US)
(74) Representative: Dehns

(57) **Abstract**

A coated substrate, comprising a substrate comprising a ceramic material; an interfacial coating multilayer disposed on the substrate, the interfacial coating multilayer comprising the following: at least one crack deflection layer disposed on the substrate; and a crack plugging multilayer comprising at least one set of at least three alternating layers containing at least two mullite-forming layers and at least one boron-containing layer, and having the following formula: S_{T}B_{U}(A_{V}B_{W}S_{V}B_{X})_{Y}A_{Z}, where A comprises aluminum nitride (AlN); S comprises at least one of the following: silicon nitride (Si₃N₄) and silicon carbide (SiC); B comprises BN; t = 0 or 1; u = 0 or 1; v = 1; w = 0 or 1; x = 0 or 1; w + x ≥ 1; y ≥ 0; and, z = 0 or 1.

## Description

### FIELD OF THE INVENTION

The subject matter disclosed herein relates to coatings and, in particular, to crack plugging coatings.

### BACKGROUND OF THE INVENTION

Often times, Si-doped BN (SiBN) can be utilized as an interface coating (IFC) for ceramic material composites (CMCs) to improve durability. Durability can be improved by promoting crack sealing through a reaction that produces borosilicate glass. However, in the presence of water vapor, borosilicate glass can volatilize and form HBO(g) and SiOH(g) species. The volatilization and formation cycle can re-open a crack(s). In contrast, Al-containing glasses, e.g., Al₂O₃, offer more durable crack sealing solutions. However, Al₂O₃ alone may not be sufficient to seal a crack. The reason being is the Pilling-Bedworth ratio of AlN is about 1.0. Oxidation of neighboring AlN and silicon nitride (Si₃N₄), or SiC, layers can lead to the formation of mullite. In contrast, mullite has a Pilling-Bedworth ratio of about 1.5, which is sufficient for crack sealing. However, at intermediate temperatures, the oxidation of both AlN and Si₃N₄, or SiC, can be sluggish when compared to BN or PyC. Both materials can be utilized as IFC materials.

Consequently, there exists a need to improve the durability of an interfacial coating system.

### SUMMARY OF THE INVENTION

The present disclosure is directed, in a first aspect, to a coated substrate, comprising a substrate comprising a ceramic material; and an interfacial coating multilayer disposed on the substrate, the interfacial coating multilayer comprising the following: at least one crack deflection layer disposed on the substrate; and a crack plugging multilayer comprising at least one set of at least three alternating layers containing at least two mullite-forming layers and at least one boron-containing layer, and having the following formula: S_{T}B_{U}(A_{V}B_{W}S_{V}B_{X})_{Y}A_{Z}, where A comprises (or is) aluminum nitride (AlN); S comprises (or is) at least one of the following: silicon nitride (Si₃N₄) and silicon carbide (SiC); B comprises (or is) BN; t = 0 or 1; u = 0 or 1; v = 1; w = 0 or 1; x = 0 or 1; w + x ≥ 1; y ≥ 0; and, z = 0 or 1.

In further embodiments of the present disclosure, including further embodiments of the above exemplary embodiments, the at least one mullite-forming crack plugging multilayer comprises (or has) a ratio of Al:Si of approximately 2:1 to approximately 3:1. This ratio may be an atomic ratio.

In further embodiments of the present disclosure, including further embodiments of the above exemplary embodiments, the coated substrate further comprises at least one oxidation resistant layer disposed between a first crack deflection layer and a second crack deflection layer, the first crack deflection layer disposed adjacent the substrate and the second crack deflection layer disposed opposite the first crack deflection layer.

In further embodiments of the present disclosure, including further embodiments of the above exemplary embodiments, the at least one oxidation resistant layer comprises at least one of the following: silicon nitride, silicon carbide and aluminum nitride.

In further embodiments of the present disclosure, including further embodiments of the above exemplary embodiments, the at least one crack deflection layer comprises (or has) a thickness of approximately 50 nm to approximately 300 nm.

In further embodiments of the present disclosure, including further embodiments of the above exemplary embodiments, the crack plugging multilayer comprises (or has) a thickness of approximately 100 nm to approximately 1 µm.

In further embodiments of the present disclosure, including further embodiments of the above exemplary embodiments, the at least two mullite-forming layers comprise a first mullite-forming material comprising (or being) aluminum nitride and having a thickness of approximately 50 nm to approximately 200 nm; and, a second mullite-forming material comprising (or being) at least one of the following: silicon nitride and silicon carbide; and, having a thickness of approximately 20 nm to approximately 100 nm.

In further embodiments of the present disclosure, including further embodiments of the above exemplary embodiments, the BN comprises (or is) amorphous boron nitride.

In further embodiments of the present disclosure, including further embodiments of the above exemplary embodiments, the amorphous boron nitride layer comprises (or has) a thickness of approximately 20 nm to approximately 50 nm.

In further embodiments of the present disclosure, including further embodiments of the above exemplary embodiments, the at least two mullite-forming layers include a first mullite-forming material comprising (or being) aluminum nitride, and a second mullite-forming material comprising (or being) at least one of the following: silicon nitride and silicon carbide.

In further embodiments of the present disclosure, including further embodiments of the above exemplary embodiments, the at least one crack deflection layer comprises (or is) at least one of the following: boron nitride, pyrolytic carbon, and combinations thereof.

In further embodiments of the present disclosure, including further embodiments of the above exemplary embodiments, the ceramic material comprises any one or more of the following: a ceramic fiber, a ceramic tow, a ceramic preform, and combinations thereof.

In another embodiment, the present disclosure is directed to a method of fabricating an interfacial coating multilayer, comprising the steps of: loading a substrate into an apparatus; depositing a crack deflection precursor material onto the substrate to form at least one crack deflection layer; and depositing at least one crack plugging multilayer precursor material onto the at least one crack deflection layer to form a crack plugging multilayer, wherein the crack plugging multilayer comprises the following: at least one set of at least three alternating layers containing at least two mullite-forming layers and at least one boron-containing layer, and having the following formula: S_{T}B_{U}(A_{V}B_{W}S_{V}B_{X})_{Y}A_{Z}, where A comprises (or is) aluminum nitride (AlN); S comprises (or is) at least one of the following: silicon nitride (Si₃N₄) and silicon carbide (SiC); B comprises (or is) BN; t = 0 or 1; u = 0 or 1; v = 1; w = 0 or 1; x = 0 or 1; w + x ≥ 1; y ≥ 0; and, z = 0 or 1.

In further embodiments of the present disclosure, including further embodiments of the above exemplary embodiments, the method further comprises heating the substrate prior to the deposition steps.

In further embodiments of the present disclosure, including further embodiments of the above exemplary embodiments, the method further comprises depositing at least one oxidation resistant layer disposed between a first crack deflection layer and a second crack deflection layer, the first crack deflection layer disposed adjacent the substrate and the second crack deflection layer disposed opposite the first crack deflection layer.

In further embodiments of the present disclosure, including further embodiments of the above exemplary embodiments, the at least one oxidation resistant layer comprises (or is) at least one of the following: silicon nitride, silicon carbide and aluminum nitride.

In further embodiments of the present disclosure, including further embodiments of the above exemplary embodiments, depositing at least one crack plugging multilayer precursor material comprises depositing at least one mullite-forming precursor material and at least one layer of crack deflection precursor material to form the at least two mullite-forming layers and the at least one boron-containing layer.

In further embodiments of the present disclosure, including further embodiments of the above exemplary embodiments, depositing at least two mullite-forming precursor materials comprises a first mullite-forming precursor material and a second mullite-forming precursor material to form a first mullite-forming layer and a second mullite-forming layer.

In further embodiments of the present disclosure, including further embodiments of the above exemplary embodiments, the first mullite-forming layer comprises (or is) aluminum nitride, and the second mullite-forming layer comprises (or is) at least one of the following: silicon nitride and silicon carbide.

In further embodiments of the present disclosure, including further embodiments of the above exemplary embodiments, the at least two mullite-forming layers comprise a first mullite-forming layer comprising (or being) aluminum nitride, and a second mullite-forming layer comprising (or being) at least one of the following: silicon nitride and silicon carbide.

In further embodiments of the present disclosure, including further embodiments of the above exemplary embodiments, the at least one crack deflection layer comprises (or is) at least one of the following: boron nitride, pyrolytic carbon, and combinations thereof.

In further embodiments of the present disclosure, including further embodiments of the above exemplary embodiments, the substrate comprises a ceramic material, the ceramic material including any one or more of the following: a ceramic fiber, a ceramic tow, a ceramic preform, and combinations thereof.

In further embodiments of the present disclosure, including further embodiments of the above exemplary embodiments, depositing comprises at least one of the following methods: chemical vapor infiltration and chemical vapor deposition.

In further embodiments of the present disclosure, including further embodiments of the above exemplary embodiments, the at least two mullite-forming layers comprise (or have) a ratio of Al:Si of approximately 2:1 to approximately 3:1. This ratio may be an atomic ratio.

Another embodiment provides an interfacial coating multilayer or a coated substrate obtainable by, or obtained by a method of the disclosure, including a method as defined in any of the preceding embodiments.

In yet another embodiment, the present disclosure is directed to a method for sealing a crack, comprising the steps of: exposing at least one gas turbine engine component to any one or more of the following: water vapor, moisture, air, elevated temperature, and combinations thereof; forming at least one crack in a matrix within a ceramic matrix composite of the at least one gas turbine engine component, the at least one crack propagating into a crack plugging multilayer deposited on a substrate of the ceramic matrix composite and deflecting within at least one crack deflection layer within the interfacial coating multilayer; producing a reaction product caused by a reaction between the crack plugging multilayer having the at least one crack with any one or more of the following: water vapor, moisture, air, elevated temperature, and combinations thereof; and sealing the at least one crack with the reaction product, wherein the crack plugging multilayer comprises the following: at least one set of at least three alternating layers containing at least two mullite-forming layers and at least one boron-containing layer, and having the following formula: S_{T}B_{U}(A_{V}B_{W}S_{V}B_{X})_{Y}A_{Z}, where A comprises (or is) aluminum nitride (AlN); S comprises (or is) at least one of the following: silicon nitride (Si₃N₄) and silicon carbide (SiC); B comprises (or is) BN; t = 0 or 1; u = 0 or 1; v = 1; w = 0 or 1; x = 0 or 1; w + x ≥ 1; y ≥ 0; and, z = 0 or 1. The crack plugging multilayer, the at least one crack deflection layer, and/or the substrate may be as defined in any preceding or succeeding embodiment.

In further embodiments of the present disclosure, including further embodiments of the above exemplary embodiments, the reaction product comprises a boron-doped aluminoborosilicate glass having a ratio of Al:Si of approximately 2:1 to approximately 3:1. This ratio may be an atomic ratio.

In further embodiments of the present disclosure, including further embodiments of the above exemplary embodiments, producing the reaction product comprises a reaction of BN, AlN and either SiC or Si₃N₄ or both SiC and Si₃N₄ in the presence of at least one of H₂O and O₂.

For the avoidance of doubt, the features of the embodiments described above are disclosed in combination with each of the substrates and methods of this disclosure. For example, in the embodiments directed to the substrate, the at least one crack deflection layer may comprise (or be) at least one of the following: boron nitride, pyrolytic carbon, and combinations thereof; and/or the at least two mullite-forming layers may comprise (or have) a ratio of Al:Si of approximately 2:1 to approximately 3:1 (this ratio may be an atomic ratio).

### BRIEF DESCRIPTION OF FIGURES

The features of the disclosure believed to be novel and the elements characteristic of the invention are set forth with particularity in the appended claims. The figures are for illustration purposes only and are not drawn to scale. The disclosure itself, however, both as to organization and method of operation, can best be understood by reference to the description of the preferred embodiment(s) which follows, taken in conjunction with the accompanying drawings in which:
FIG. 1 is a flowchart illustrating an exemplary method of fabricating a ceramic-containing material including an exemplary crack plugging multilayer.
FIG. 2, not drawn to scale, illustrates an exemplary ceramic-containing material including an exemplary crack plugging multilayer.
FIG. 3, not drawn to scale, illustrates another exemplary ceramic-containing material including another exemplary crack plugging multilayer.
FIG. 4, not drawn to scale, schematically illustrates a gas turbine engine containing gas turbine engine components that can include the exemplary ceramic-containing materials and the exemplary crack plugging multilayer disclosed herein.

### DETAILED DESCRIPTION OF THE INVENTION

The embodiments of the present disclosure can comprise, consist of, and consist essentially of the features and/or steps described herein, as well as any of the additional or optional ingredients, components, steps, or limitations described herein or would otherwise be appreciated by one of skill in the art. It is to be understood that all concentrations disclosed herein are by weight percent (wt. %.) based on a total weight of the composition unless otherwise indicated.

The present disclosure is directed to a coating system including an exemplary crack plugging multilayer having alternating layers of BN, Si₃N₄ and AlN deposited on a functional IFC. The addition of B to the exemplary crack plugging multilayer can greatly enhance the oxidation rate of AlN and Si₃N₄. As the AlN and Si₃N₄ layers oxidize, the reaction product forms a boron-doped mullite-like material that plugs the crack(s).

As disclosed herein, the term "ceramic-containing material" may be defined as a substrate containing fiber(s), tow(s), preform(s); individually and combinations thereof. Suitable ceramic fibers for use as the fibers and/or fiber tows may include, but are not limited to, silicon carbide, carbon, aluminum oxide, silicon nitride, combinations thereof, and the like. At least one fiber, at least one fiber tow, or at least one fiber and fiber tow may be combined to fabricate the ceramic fiber preform using any suitable technique known.

As used herein, a "coated preform" or "coated substrate" refers to an interface coated ceramic fiber preform or an interface coated ceramic fiber substrate. As also used herein, a "partially densified CMC" or "partially densified ceramic matrix composite" refers to a coated substrate or preform that includes a structural support material layer that facilitates rigidization of the preform to become self-supporting, also known as a rigidized coated substrate or rigidized coated preform. As also used further herein, a "ceramic matrix composite" or "CMC" refers to a matrix infiltrated into the coated substrate or coated preform or alternatively, a matrix infiltrated into the rigidized partially densified CMC.

As used herein, a "crack deflection layer" may also be known as a "debonding layer". Likewise, a "debonding layer" also may be known as a "crack deflection layer".

As used herein, a "crack plugging" may also be known as a "crack sealing". Likewise, a "crack sealing" also may be known as a "crack plugging".

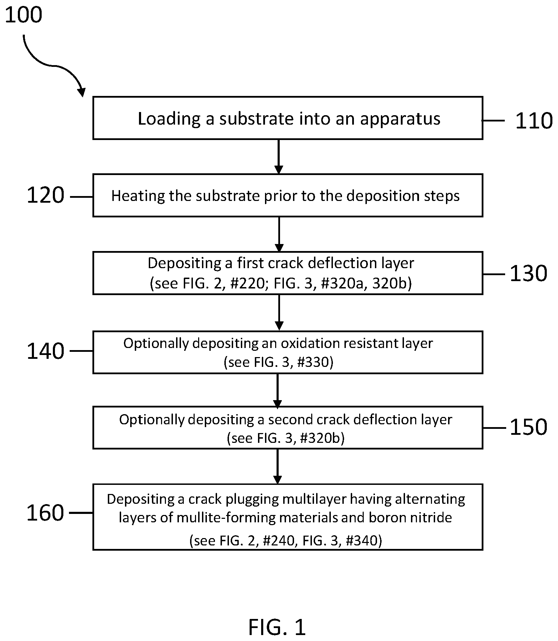

Referring now to FIG. 1, a flowchart 100 illustrating a process for fabricating an exemplary interface coating is shown. At a step 110 of FIG. 1, a substrate comprising a ceramic-containing material may be loaded into an apparatus. Suitable apparatus may include, but are not limited to, any apparatus capable of depositing a material onto a ceramic-containing material. In particular, the apparatus may be a chemical vapor infiltration (CVI) reactor, a chemical vapor deposition (CVD) reactor, and combinations thereof. Depending on the precursor materials being utilized and desired material deposited, additional apparatus may be utilized. Such additional apparatus may include, but is not limited to, a chlorinator, and combinations thereof. Next, at a step 120 of FIG. 1, in preparation for the deposition steps that follow, the substrate may be heated. Next, at a step 130 of FIG. 1, a precursor crack deflection material may be deposited onto the substrate to form a first crack deflection layer. Any suitable precursor crack deflection material and resultant crack deflection coating may be utilized. For example, suitable crack deflection coating material may include, but is not limited to, boron nitride, pyrolytic carbon, and combinations thereof. Next, at a step 140 of FIG. 1, an optional oxidation resistant precursor material may be deposited onto the first crack deflection layer to form an oxidation resistant layer. Any suitable oxidation resistant precursor material and resultant oxidation resistant coating material may be utilized. For example, suitable oxidation resistant coating material may include, but is not limited to, silicon nitride, aluminum nitride, silicon carbide, and combinations thereof. Next, at a step 150 of FIG. 1, another precursor crack deflection material may be deposited onto the optional oxidation resistant layer to form a second crack deflection layer. As discussed above, suitable crack deflection coating material may include, but is not limited to, boron nitride, pyrolytic carbon, and combinations thereof. For purposes of illustration, and not to be taken as limiting, the exemplary interfacial coating layer disclosed herein may include any one or more of the aforementioned layers in various combinations, configurations and embodiments. Illustrative exemplary embodiments will be discussed further.

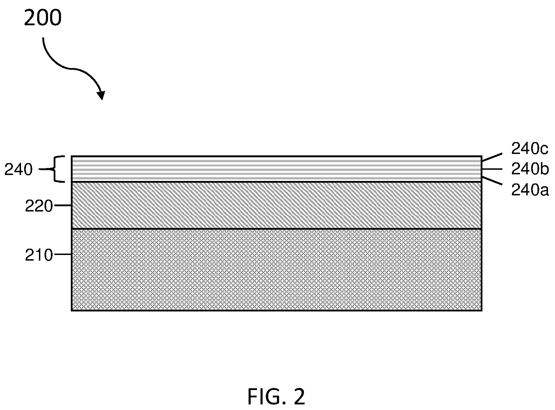

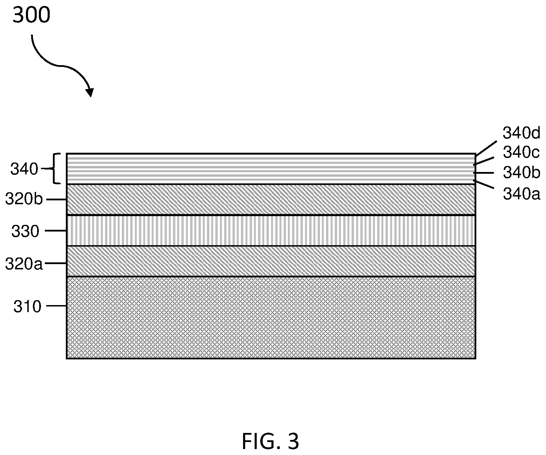

Lastly, at a step 160 of FIG. 1, the precursor materials for an exemplary crack plugging layer structure may be deposited onto the first crack deflection layer or optional second crack deflection layer. The exemplary crack plugging multilayer may include alternating layers of mullite-forming coating materials and a boron-containing coating material(s). Suitable mullite-forming materials may include, but are not limited to, aluminum nitride, silicon nitride, silicon carbide and combinations thereof. Once the suitable precursor materials are deposited and the resultant layers formed, the exemplary crack plugging multilayer may comprise alternating layers of aluminum nitride, silicon nitride, silicon carbide or boron nitride. More particularly, the crack plugging multilayer can include at least one layer of aluminum nitride, at least one layer of boron nitride, and at least one layer of either silicon nitride or silicon carbide. The order of the aforementioned layers can vary. And, the exemplary formula of the exemplary crack plugging multilayer discussed below demonstrates how those aforementioned layers' order can vary. When the AlN, BN and Si₃N₄ layers oxidize, their combined reaction product may form a boron-doped mullite-like composition, such as, but not limited to, a boron-doped xAl₂O₃·ySiO₂ oxide. In contrast, prior to oxidation occurring, the AlN and Si₃N₄ layers may be mullite-forming materials as, once oxidized, their combined reaction product may form the aforementioned mullite-like composition. However, in at least one embodiment, the alternating layers will comprise at least one set of at least three layers of aluminum nitride, amorphous boron nitride, and silicon nitride. The number of sets of alternating layers deposited may reflect the desired thickness of the resultant exemplary crack plugging multilayer. For example, the exemplary crack plugging multilayer may comprise a formula such as S_{T}B_{U}(A_{V}B_{W}S_{V}B_{X})_{Y}A_{Z}, where A may comprise AlN; S may comprise at least one of the following: Si₃N₄ and SiC; B may comprise BN; t = 0 or 1; u = 0 or 1; v = 1; w = 0 or 1; x = 0 or 1; w + x ≥ 1; y ≥ 0; and, z = 0 or 1. In at least one embodiment, and as mentioned above, the aforementioned formula may encompass a crack plugging multilayer comprising at least one set of three layers, such as, but not limited to AlN-BN-Si₃N₄ (see FIG. 2 below) or at least one set of four layers, such as, but not limited to AlN-BN- Si₃N₄-BN (see FIG. 3 below).

Throughout the process set forth above and illustrated in FIG. 1, the operating parameters of the CVI reactor or CVD reactor may be adjusted for each material being deposited. For example, when the initial layer of, e.g., boron nitride, pyrolytic carbon, and combinations thereof, is deposited, the operating parameters of the respective reactor may be attuned to the conditions necessary to deposit the intended material. However, when the exemplary crack plugging multilayer containing the alternating layers of, e.g., aluminum nitride/silicon nitride/silicon carbide, amorphous boron nitride, aluminum nitride/silicon nitride/silicon carbide, and, optionally, amorphous boron nitride, are deposited, the operating parameters of the respective reactor may be adjusted and attuned to the conditions necessary to deposit the intended materials. Such adjustments may be made throughout the process to fabricate the exemplary crack plugging multilayer. For example, in the instant application, the processing parameters for the individual material layers of the crack plugging multilayer can be selected to reflect a ratio of the deposition kinetics to the gas diffusion is equal. Doing so can ensure the total ratio of deposited Al:Si in the crack plugging multilayer approximates mullite (3Al₂O₃·2SiO₂).

With such knowledge in mind, in at least one embodiment, the process may operate at a suitable temperature range of approximately 600°C to approximately 1100°C. Such a temperature range encompasses the deposition temperatures for the various precursor materials discussed herein. For example, precursors of amorphous boron nitride may have a deposition temperature of approximately 700°C to approximately 900°C, and, more particularly, approximately 700°C to approximately 800°C. In another example, precursors of silicon nitride may have a deposition temperature of approximately 750°C to approximately 950°C, and, more particularly, approximately 850°C to approximately 900°C. In yet another example, precursors of silicon carbide may have a deposition temperature of approximately 900°C to approximately 1100°C, and, more particularly, approximately 900°C to approximately 950°C. In still yet another example, precursors of aluminum nitride may have a deposition temperature of approximately 700°C to approximately 1000°C. With respect to precursors, the process may utilize various precursor materials for depositing the aforementioned amorphous boron nitride, silicon carbide, aluminum nitride, and silicon nitride layers. Suitable precursor materials may include, but are not limited to, AlCl₃, BCl₃, NH₃, CH₄, SiCl₄, HSiCl₃, methyl trichlorosilane (MTS); individually, and combinations thereof. During operation of the exemplary method, the aforementioned precursor materials may be delivered into the respective reactor using a carrier gas. Suitable carrier gases may include, but are not limited to, hydrogen, argon, nitrogen, and combinations thereof.

Referring now to FIGS. 2 and 3, two exemplary coated substrates 200, 300 are illustrated. In each exemplary embodiment, the coated substrates 200, 300 may respectively have a substrate 210, 310, e.g., a ceramic-containing material such as fiber(s), fiber tow(s), or both. Each substrate 210, 310 may exhibit and possess a first crack deflection layer 220 or first and second crack deflection layers 320a, 320b; and, a crack plugging multilayer 240, 340 containing mullite-forming material layers 240a, 340a and 240c, 340c, and amorphous boron nitride layers 240b, 340b (see FIGS 2 and 3). In at least one embodiment, and not to be limited to the examples disclosed herein, the crack plugging multilayer of FIG. 2 may encompass (AlN-BN-Si₃N₄), which may also be expressed as the formula of S_{T}B_{U}(A_{V}B_{W}S_{V}B_{X})_{Y}A_{Z}, where t = 0, u = 0, v = 1, w = 1, x = 0, y = 1, and z = 0, or (A_{V}B_{W}S_{V}). In at least one other embodiment, and not to be limited to the examples disclosed herein, the crack plugging multilayer of FIG. 3 may encompass AlN-BN-Si₃N₄-BN, which may also be expressed as the formula of S_{T}B_{U}(A_{V}B_{W}S_{V}B_{X})_{Y}A_{Z}, where t = 0, u = 0, v = 1, w = 1, x = 1, y = 1, and z = 0, or (A_{V}B_{W}S_{V}B_{X}).

In at least one embodiment, the first and second crack deflection layer(s) 220, 320a, 320b may exhibit and possess a thickness of approximately 50 nm to approximately 300 nm, and, more particularly, approximately 50 nm to approximately 100 nm. In at least one other embodiment, the crack plugging multilayer 240, 340 may exhibit and possess a total thickness of approximately 100 nm to approximately 1 µm. With respect to the crack plugging multilayer 240, 340, the individual layers 240a, 240b, 240c and 340a, 340b, 340c contained therein also may exhibit and possess particular thickness(es). For example, the aluminum nitride layer 240a, 340a may comprise (or have) a thickness of approximately 50 nm to approximately 200 nm, and, more particularly, approximately 75 nm to approximately 150 nm. In contrast, the silicon nitride layers 240c, 340c may comprise (or have) a thickness of approximately 20 nm to approximately 100 nm, and, more particularly, approximately 30 nm to approximately 60 nm. In at least one other embodiment, the amorphous boron nitride layers 240b and 340b, 340d may comprise (or have) a thickness of approximately 20 nm to approximately 50 nm. The aforementioned individual material layers 240a,b,c and 340a,b,c may comprise (or have) any individual thickness disclosed herein so long as the thickness of the aluminum nitride layer 240a, 340a is greater than the thickness of the silicon nitride layer 240c, 340c. For example, a ratio of the thickness of an aluminum nitride layer to the thickness of a silicon nitride layer may be approximately 2:1 to approximately 3:1, and, more particularly, approximately 2.5:1. By maintaining such respective thicknesses, the mullite-forming coating materials can eventually form a boron-doped mullite-like composition whose total ratio of Al:Si approximates mullite (3Al₂O₃·2SiO₂).

Referring specifically now to FIG. 3, the exemplary coated substrate 300 may further comprise an additional layer such as, but not limited to, an oxidation resistant layer 330. The oxidation resistant layer 330 may comprise, but is not limited to, silicon nitride, aluminum nitride, silicon carbide, and combinations thereof. The oxidation resistant layer 330 may further comprise (or have) a thickness of less than approximately 400 nm and, more particularly, from approximately 100 nm to approximately 200 nm. In at least one embodiment, the additional layer may further include boron nitride for crack deflection; and, silicon nitride or aluminum nitride for oxidation resistance. The additional layers may be deposited prior to the crack plugging multilayer being deposited.

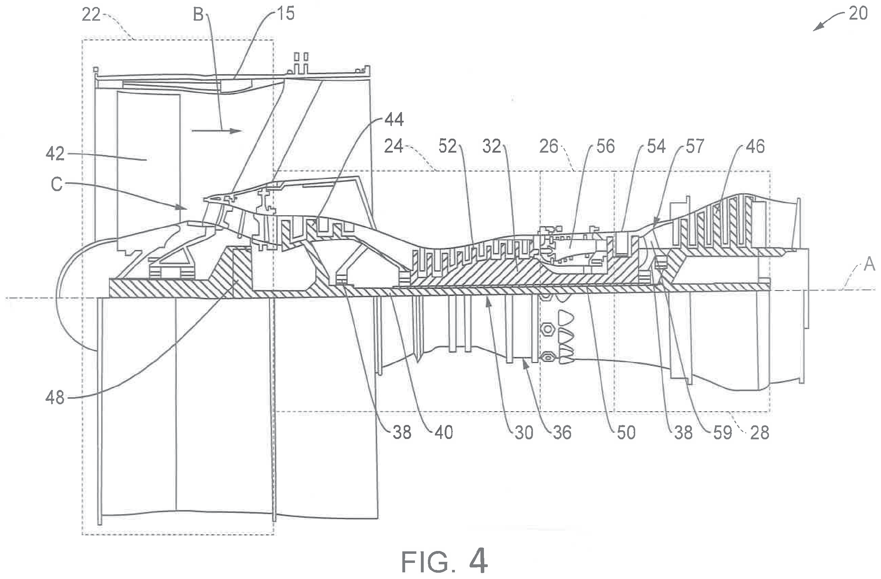

Referring now to FIG. 4, a gas turbine engine 20 is schematically illustrated. The gas turbine engine 20 (i.e., a two-spool turbofan) includes a fan section 22, a compressor section 24, a combustor section 26, and a turbine section 28. Fan section 22 drives air along a bypass flow path B in a bypass duct defined within a housing 15, and also along a core flow path C for compression in compressor section 24, with subsequent introduction into combustor section 26, followed by expansion through turbine section 28. Although FIG. 4 depicts a two-spool turbofan gas turbine engine, it should be understood that the concepts described herein are not limited to use with two-spool turbofans engines and may be applied to other types of turbine engines.

Engine 20 generally includes a low speed spool 30 and a high speed spool 32 mounted for rotation about an engine central longitudinal axis A, relative to an engine static structure 36, via several bearing systems 38. Various bearing systems 38 at various locations may alternatively or additionally be provided. The location of bearing systems 38 may be varied as appropriate to the application.

The low speed spool 30 generally includes an inner shaft 40 that interconnects, a first (or low) pressure compressor 44 and a first (or low) pressure turbine 46. Inner shaft 40 is connected to fan 42 through a speed change mechanism, which in this exemplary embodiment is illustrated as a geared structure 48 to drive fan 42 at a lower speed than the low speed spool 30. High speed spool 32 includes an outer shaft 50 that interconnects a second (or high) pressure compressor 52 and a second (or high) pressure turbine 54. Combustor 56 is positioned between high pressure compressor 52 and high-pressure turbine 54. A mid-turbine frame 57 of the engine static structure 36 may be arranged generally between the high-pressure turbine 54 and the low-pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core air flow is first compressed by low pressure compressor 44, and then by the high-pressure compressor 52. Thereafter, the core air flow is mixed and burned with fuel in combustor 56, then expanded in high pressure turbine 54 and low-pressure turbine 46. The mid-turbine frame 57 includes airfoils 59 which are in the core airflow path C. The turbines 46 and 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low-pressure compressor, or aft of the combustor section 26 or even aft of turbine section 28, and fan 42 may be positioned forward or aft of the location of gear system 48.

The turbine section 28 includes at least one rotor and at least one blade extending radially outwardly from the rotor. The turbine section 28 may further include a blade outer air seal(s) (BOAS(s)). The blade outer air seal can be an assembly of a plurality of BOAS segments that together form an annular shaped shroud around the engine's central longitudinal axis A which is positioned between an outer casing of the engine and the turbine blade(s) of the turbine section.

Any one or more of the aforementioned gas turbine engine components of the gas turbine engine 20 may contain ceramic matrix composites (CMCs) that include the exemplary coated substrate(s) disclosed herein. The aforementioned gas turbine components may include, but are not limited to, rotors, blades, blade outer air seal(s); individually, and combinations thereof. In operating conditions exhibiting high temperatures and water vapor concentrations, the amorphous boron nitride of the exemplary crack plugging multilayer can quickly oxidize. This oxidation reaction can enhance the oxidation rate of both aluminum nitride and silicon nitride present within the multilayer. The aluminum nitride and silicon nitride can begin forming a plug to plug the crack(s). The resultant reaction product of the aforementioned oxidation reactions can be an aluminoborosilicate glass exhibiting a composition similar to boron-doped mullite. The resultant aluminoborosilicate glass ultimately forms the plug and seals the crack(s).

While the present disclosure has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope and spirit of the present disclosure.

## Claims

1. A coated substrate, comprising:
a substrate comprising a ceramic material; and
an interfacial coating multilayer disposed on the substrate, the interfacial coating multilayer comprising the following:
at least one crack deflection layer disposed on the substrate; and
a crack plugging multilayer comprising at least one set of at least three alternating layers containing at least two mullite-forming layers and at least one boron-containing layer, and having the following formula: S_{T}B_{U}(A_{V}B_{W}S_{V}B_{X})_{Y}A_{Z}, where A comprises aluminum nitride (AlN); S comprises at least one of the following: silicon nitride (Si₃N₄) and silicon carbide (SiC); B comprises BN; t = 0 or 1; u = 0 or 1; v = 1; w = 0 or 1; x = 0 or 1; w + x ≥ 1; y ≥ 0; and, z = 0 or 1.

2. The coated substrate of claim 1, wherein the at least one mullite-forming crack plugging multilayer comprises a ratio of Al:Si of approximately 2:1 to approximately 3:1.

3. The coated substrate of any preceding claim, further comprising at least one oxidation resistant layer disposed between a first crack deflection layer and a second crack deflection layer, the first crack deflection layer disposed adjacent the substrate and the second crack deflection layer disposed opposite the first crack deflection layer.

4. The coated substrate of any preceding claim, wherein at least one crack deflection layer comprises a thickness of approximately 50 nm to approximately 300 nm.

5. The coated substrate of any preceding claim, wherein the crack plugging multilayer comprises a thickness of approximately 100 nm to approximately 1 µm.

6. The coated substrate of any preceding claim, wherein the at least two mullite-forming layers comprise a first mullite-forming material comprising aluminum nitride and having a thickness of approximately 50 nm to approximately 200 nm; and, a second mullite-forming material comprising at least one of the following: silicon nitride and silicon carbide; and, having a thickness of approximately 20 nm to approximately 100 nm.

7. The coated substrate of any preceding claim, wherein the amorphous boron nitride layer comprises a thickness of approximately 20 nm to approximately 50 nm.

8. A method of fabricating an interfacial coating multilayer, comprising the steps of:
loading a substrate into an apparatus;
depositing a crack deflection precursor material onto the substrate to form at least one crack deflection layer; and
depositing at least one crack plugging multilayer precursor material onto the at least one crack deflection layer to form a crack plugging multilayer,
wherein the crack plugging multilayer comprises the following:
at least one set of at least three alternating layers containing at least two mullite-forming layers and at least one boron-containing layer, and having the following formula: S_{T}B_{U}(A_{V}B_{W}S_{V}B_{X})_{Y}A_{Z}, where A comprises aluminum nitride (AlN); S comprises at least one of the following: silicon nitride (Si₃N₄) and silicon carbide (SiC); B comprises BN; t = 0 or 1; u = 0 or 1; v = 1; w = 0 or 1; x = 0 or 1; w + x ≥ 1; y ≥ 0; and, z = 0 or 1.

9. The method of claim 8, further comprising heating the substrate prior to the deposition steps.

10. The method of claim 8 or claim 9, further comprising depositing at least one oxidation resistant layer disposed between a first crack deflection layer and a second crack deflection layer, the first crack deflection layer disposed adjacent the substrate and the second crack deflection layer disposed opposite the first crack deflection layer.

11. The coated substrate of any of claims 3-7 or the method of claim 10, wherein the at least one oxidation resistant layer comprises at least one of the following: silicon nitride, silicon carbide and aluminum nitride.

12. The method of any of claims 8-11, wherein
(A) depositing at least one crack plugging multilayer precursor material comprises depositing at least one mullite-forming precursor material and at least one layer of crack deflection precursor material to form the at least two mullite-forming layers and the at least one boron-containing layer; and/or
(B) the at least two mullite-forming layers comprise a first mullite-forming layer comprising aluminum nitride, and a second mullite-forming layer comprising at least one of the following: silicon nitride and silicon carbide; and/or
(C) the at least one crack deflection layer comprises at least one of the following: boron nitride, pyrolytic carbon, and combinations thereof; and/or
(D) depositing comprises at least one of the following methods: chemical vapor infiltration and chemical vapor deposition; and/or
(E) wherein the at least two mullite-forming layers comprise a ratio of Al:Si of approximately 2:1 to approximately 3:1.

13. A method for sealing a crack, comprising the steps of:
exposing at least one gas turbine engine component to any one or more of the following: water vapor, moisture, air, elevated temperature, and combinations thereof;
forming at least one crack in a matrix within a ceramic matrix composite of the at least one gas turbine engine component, the at least one crack propagating into a crack plugging multilayer deposited on a substrate of the ceramic matrix composite and deflecting within at least one crack deflection layer within the interfacial coating multilayer;
producing a reaction product caused by a reaction between the crack plugging multilayer having the at least one crack with any one or more of the following: water vapor, moisture, air, elevated temperature, and combinations thereof; and
sealing the at least one crack with the reaction product,
wherein the crack plugging multilayer comprises the following:
at least one set of at least three alternating layers containing at least two mullite-forming layers and at least one boron-containing layer, and having the following formula: S_{T}B_{U}(A_{V}B_{W}S_{V}B_{X})_{Y}A_{Z}, where A comprises aluminum nitride (AlN); S comprises at least one of the following: silicon nitride (Si₃N₄) and silicon carbide (SiC); B comprises BN; t = 0 or 1; u = 0 or 1; v = 1; w = 0 or 1; x = 0 or 1; w + x ≥ 1; y ≥ 0; and, z = 0 or 1.

14. The method of claim 13, wherein the reaction product comprises a boron-doped aluminoborosilicate glass having a ratio of Al:Si of approximately 2:1 to approximately 3:1.

15. The method of claim 13 or claim 14, wherein producing the reaction product comprises a reaction of BN, AlN and either SiC or Si₃N₄ or both SiC and Si₃N₄ in the presence of at least one of H₂O and O₂.
